# EUROPEAN PATENT APPLICATION

(11) **EP 0 952 695 A2**
(43) Date of publication of application: **27.10.1999**
(21) Application number: 99107324.8
(22) Date of filing: 20.04.1999
(51) Int. Cl.: H04L 1/20

(54) **Bit error rate measuring circuit using synchronous word and color code**

(30) Priority: 23.04.1998 JP 11365098
(71) Applicant: NEC CORPORATION, Tokyo (JP)
(72) Inventor: Anzai, Takeshi, Nec Saitama, Ltd., Kamikawamachi, Kodama-gun (JP)
(74) Representative: VOSSIUS & PARTNER

(57) **Abstract**

A bit error rate measuring circuit is disclosed which uses a synchronous word and a color code. A shift register stores serial data obtained by demodulating the received signal one bit at a time. A storing unit stores a synchronous word and a color code which are unscrambled data predicted to have been transmitted from a transmitting device. A synchronization detecting circuit detects synchronization between the serial data and a synchronous word and produces a latch signal and a reset signal at the timing of detecting the synchronization. A latch circuit latches the serial data when the latch signal is supplied. A comparator compares the signal latched by the latch circuit with the signal stored in the storing unit one bit at a time, to determine the number of error bits, that is as the number of mismatched bits. If a reset signal is not supplied for a predetermined period of time, a timing control circuit produces a forcible latch signal to make the synchronous detecting circuit produce the latch signal.

## Description

The present invention relates to a bit error rate measuring circuit for measuring a bit error rate of received data, and more particularly to a bit error rate measuring circuit for use in a TDMA (Time Division Multiple Access) receiver.

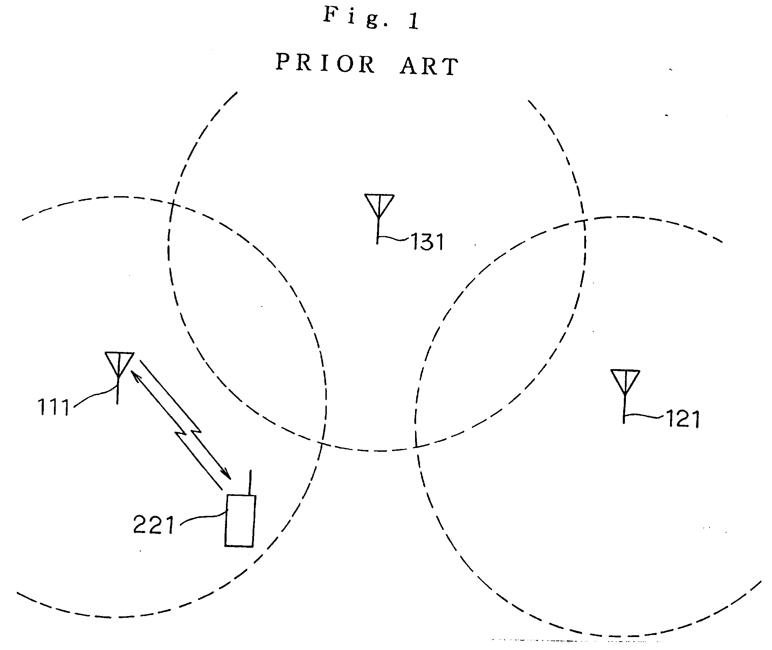

Fig. 1 shows an example of a digital automobile telephone system which comprises a plurality of radio base stations 111, 121 and 131 and a mobile station 221. Mobile station 221 selects one from the plurality of radio base stations 111, 121 and 131 to establish a communication channel with the selected radio base station for communication.

Since mobile station 221 moves with its communication channel connected, it must change a radio base station with a connected state. This operation is called a hand-over operation. In such a digital automobile telephone system, selecting of a radio base station for changing connection at a hand-over operation is carried out through the measurement of communication quality in a communication channel between a radio base station and a mobile station. The mobile station and the radio base station perform, in addition to control for the hand-over operation, channel control through the measurement of communication quality in the communication channel.

The mobile station, performs measuring a bit error rate of received data to obtain receiving quality. In the conventional mobile station, the bit error rate is estimated based on a result of error detection of received data.

Error detection involves a check to determine whether or not bit error exists in a bit string composed of a predetermined number of bits (8 to 14 bits) by means of an error detecting code contained in the received data. It is however impossible to determine the number of bit errors using this method. Thus, even if a plurality of error bits exist in a bit string, this is not reflected in the measured bit error rate. As a result, this method has a low accuracy of a bit error rate.

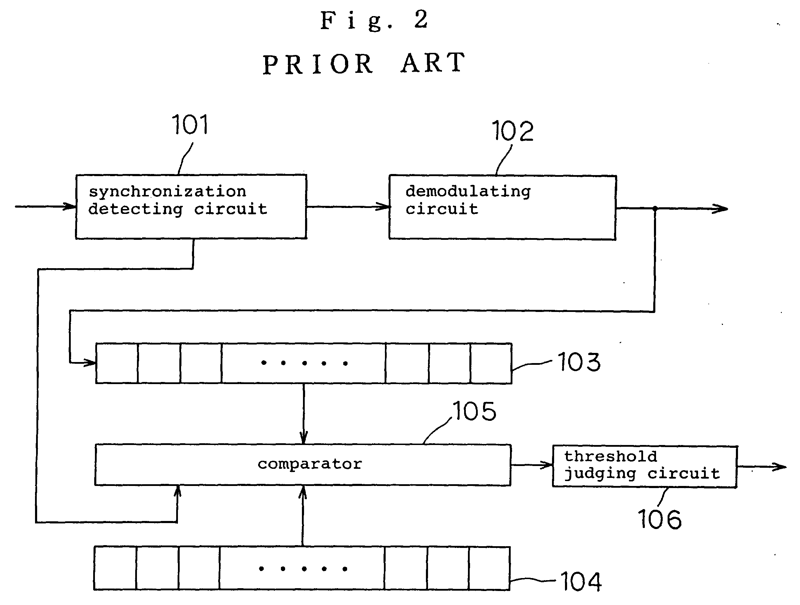

Japanese Patent Laid-Open No. 307531/97 discloses a bit error rate measuring circuit that has solved the foregoing problem and has an improved measuring accuracy. The conventional bit error rate measuring circuit comprises a synchronization detecting circuit 101, a demodulating circuit 102, a shift register 103, a bit register 104, a comparator 105, and a threshold judging circuit 106, as shown in Fig. 2. Synchronisation detecting circuit 101 detects a synchronization timing using a synchronous word contained in a received signal.

In the TDMA system, one communication channel is divided into a plurality of slots and is shared among a plurality of mobile station by allocating each slot to different mobile stations. This requires that, synchronization must be established between a transmitting side and a receiving side. For this purpose, at the transmitting side, a known synchronous word is previously included in data to have been transmitted, and at the receiving side, detection is made of the timing coincidence between the received synchronous word and a synchronous word provided beforehand, thereby establishing synchronization between the transmitting side and the receiving side.

Demodulating circuit 102 demodulates a received signal with the synchronization timing as detected by synchronization detecting circuit 101, and then outputs the resultant signal as demodulated data. Shift register 103 is capable of storing data, the number of bits being equal to that of synchronous words, and sequentially stores each bit of demodulated data outputted from demodulating circuit 102 each in synchronization with received clock signals.

Bit register 104 stores a binary code having a content identical to that of a predetermined synchronous word. Comparator 105 compares a stored content of shift register 103 with a stored content of bit register 104 at the synchronisation timing as detected by synchronization detecting circuit 101, and transmits to threshold judging circuit 106 the number of bits which is not included in the coincident contents. When the number of bits contained in a predetermined number of slots has exceeded a predetermined threshold number, threshold judging circuit 106 notifies a control circuit (not shown) for controlling an operation of the mobile station of it

An operation of the conventional bit error rate measuring circuit will be described.

Received signals undergo synchronisation detection at synchronization detecting circuit 101, and then demodulated with a synchronization timing as detected by demodulating circuit 102. Then, the demodulated signals are stored in sequence in shift register 103. Bit register 104 has stored a binary code identical in content to a predetermined synchronous word. Comparator 105 compares each bit of the contents of shift register 103 and bit register 104 at the synchronization timing as detected by synchronisation detecting circuit 101. At this time, the data shift register 103 has stored at the time synchronization timing as detected by synchronisation detecting circuit 101 is a received synchronous word. To this end, comparator 105 compares each bit of the synchronous word contained in each of the received signals with the corresponding bit of the previously stored synchronous word.

Thereafter, comparator 105 transmits the number of disparity bits between the contents of shift register 103 and bit register 104 as the number of error bits to threshold judging circuit 106.

The conventional bit error rate measuring circuit has a capability of measuring a bit error rate with a higher accuracy as compared with a method to measure a bit error rate with an error detection code.

However, since the synchronous word includes typically 20 bits, an obtained bit error rate is not always coincident with a bit error rate of a received signal. For obtaining a bit error rate near a bit error rate of a received signal, it is necessary to measure bit error rates of synchronous words of the number of slots to obtain an average rate thereof.

For proper control of the communication between the mobile station and the radio base station, a bit error rate must be measured with much higher accuracy. But if it takes much time to measure the bit error rate, proper control of the mobile station would be impossible.

There may be some communication system, which include a plurality of synchronous words. In such a communication system, a procedure to write corresponding synchronous words into bit register 104 is needed. However, since a CPU for controlling the mobile station performs various kinds of control such as switching of a radio base station to be connected to another, the number of processing steps necessary for measuring a bit error rate must be reduced as much as possible.

Furthermore, if a bit error rate is increased and the number of error bits included in received data is thereby increased, synchronization cannot be detected by synchronization detecting circuit 101 shown in Fig. 2. As a result, in the conventional bit error rate measuring circuit is unable to measure the bit error rate.

It is an object of the present invention to provide a bit error rate measuring circuit which is capable of measuring of a bit error rate in a short time with a small number of processing steps and with higher accuracy.

It is another object of the present invention to provide a bit error rate measuring circuit which is capable of measuring a bit error rate with a large value.

According to one aspect of the present invention, a signal received from a transmitting device is demodulated to obtain a serial data. From among a signal contained in the serial data, a signal that can be predicted to have been transmitted from the transmitting device and is unscrambled, is compared with a previously stored signal bit by bit to determine the number of disparity bits between the two signals. Finally, a bit error rate is determined from the disparity bits.

With the use of a signal that is contained a serial data obtained from a demodulated received signal, can be predicted to have been transmitted from the transmitting device and is unscrambled, a bit error rate with higher accuracy is achieved.

According to one embodiment of the present invention, the signal that can be predicted to have been transmitted from the transmitting device and unscrambled is previously stored.

According to another embodiment of the present invention, the signal that can be predicted to have been transmitted from the transmitting device and unscrambled comprises a synchronous word and a color code.

According to another aspect of the present invention, a plurality of the numbers of error bits are determined from a plurality of signals that can be predicted to have been transmitted from the transmitting device and are unscrambled, from among an obtained serial data, From among the numbers of the error bits, only the numbers of bits are selected that are determined from the signal currently contained in the serial data, and a bit error rate is calculated from the selected numbers of bits.

In a bit error rate measuring circuit according to the present invention, even if a plurality of unscrambled signals predicted to have been transmitted from a transmitting device are contained in the obtained serial data, and these signals are transmitted alternatively, a bit error rate of the received signal can be measured with high accuracy and speedily.

According to another embodiment of the present invention, a plurality of unscrambled signals predicted to have been transmitted from a transmitting device comprises a signal consisting of a superframe synchronous word contained in a frame positioned in a head frame of a superframe and a color code, a signal consisting of a synchronous word contained in a frame other than the head frame of the superframe and the color code, and a signal consisting of a synchronous word of a synchronous burst.

In a bit error rate measuring method according to the present invention, unscrambled data predicted to have been transmitted from a transmitting device is stored previously in a storing means. A shift register stores serial data obtained by demodulating the received signal one bit at a time. A synchronization detecting means detects synchronization between the serial data and a synchronous word, and produces a latch signal at the timing of detecting the synchronization. When the latch signal is produced, a latch circuit lathes from among serial data stored in the shift register, a signal present in a bit locating of a signal stored in the storing means. A comparator compares the signal latched by the latch circuit with the signal stored in the storing means one bit at a time, to determine the number of error bits, that is as the number of mismatched bits.

The bit error rate measurement using the unscrambled signal contained in the serial data and predicted to have been transmitted from a transmitting device, enables the measurement a bit error rate of the received signal with higher accuracy.

According to another embodiment of the present invention, the unscrambled signal predicted beforehand to have been transmitted comprises a synchronous word and a color code.

According to another aspect of the present invention, a bit error rate measuring circuit comprises a timing control circuit for producing a forcible latch signal if a reset signal is not supplied with a predetermined period of time. In this case, the synchronization detecting means produces a latch signal and a reset signal at the timing of detecting synchronization. When the forcible latch signal is supplied from the timing control circuit, the synchronization detecting means generates the latch signal even if synchronization of the serial data is not detected.

In the present invention, even when a bit error rate is large and synchronisation is not detected by the synchronization detecting means, the timing control circuit supplies a forcible latch signal to the synchronous detection circuit, causing the synchronous detection circuit to produces a latch signal if the timing control circuit does not receive the reset signal for a fixed period of time. A comparing circuit compares the data at a time after a slot time from the time of synchronisation is detected with a signal stored in the storing means, and even if a bit error rate becomes too large for the synchronisation detection circuit to detect the synchronization of the serial data using a synchronous word, a bit error rate of the received signal can be measured.

In another bit error rate measuring circuit according to the present invention, a plurality of storing means stores a signal including a plurality of synchronous words and color codes respectively. In the embodiment, the synchronization detecting means produces a switching signal corresponding to a synchronous word used for detecting the synchronization. A selector selects only the number of error bits corresponding to the switching signal.

In a bit error rate measuring circuit according to the present invention, even if a plurality of unscrambled signals predicted to have been transmitted from a transmitting device are contained in the obtained serial data, and these signals are transmitted alternatively, a bit error rate of the received signal can be measured with high accuracy and speedily and procedure of changing synchronous words to be stored in the storing means is not required

Furthermore, according to another embodiment of the present invention, a plurality of signals stored in the storing means comprise a signal consisting of a superframe synchronous word contained in a head frame of a superframe and a color code, a signal consisting of a synchronous word contained in a frame other than the head frame of the superframe and the color code, and a signal consisting of a synchronous word of a synchronous burst.

The above and other objects, features and advantages of the present invention will become apparent from the following description with reference to the accompanying drawings which illustrate examples of the present invention.
Fig. 1 is a schematic diagram of a conventional mobile communication system;
Fig. 2 is a block diagram of a conventional bit error rate measuring circuit;
Fig. 3 is a block diagram of a mobile station which includes a bit error rate measuring circuit according to a first embodiment of the present invention;
Fig. 4 is a block diagram of a bit error rate measuring circuit 30 shown in Fig. 3;
Fig. 5 is a view illustrating a data structure on a communication channel;
Fig. 6 is a view showing a signal format of a downlink channel on a physical control channel;
Fig. 7 is a view showing a signal format of a downlink channel in a physical control channel;
Fig. 8 is a block diagram of a bit error rate measuring circuit of a second embodiment according to the present invention;
Fig. 9 is a view showing a downlink channel in a synchronous burst;
Fig. 10 is a block diagram of a bit error rate measuring circuit of a third embodiment according to the present invention; and
Fig. 11 is a block diagram of a bit error rate measuring circuit of a fourth embodiment according to the present invention.

### First embodiment

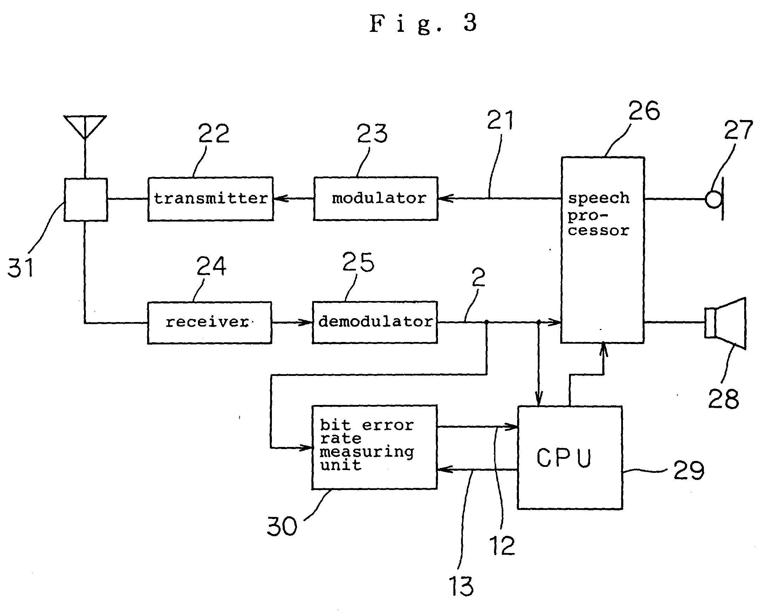

Referring now to Fig. 3, there is illustrated a mobile station according to a first embodiment of the present invention. The mobile station comprises a duplexer 31, a transmitter 22, modulator 23, receiver 24, demodulator 25, speech processor 26, voice input unit 27, voice output unit 28, CPU 29, and bit error rate measuring circuit 30.

Duplexer 31 serves to prevent a signal transmitted from transmitter 22 from being detoured to receiver 24. Receiver 24 receives a signal transmitted from a radio base station. Demodulator 25 demodulates the signal received by receiver 24, and then outputs the demodulated signal as serial data 2. Modulator 23 modulates serial data 21, and outputs modulated serial data 21.

Transmitter 22 amplifies a signal from modulator 23, and outputs the amplified signal to the radio base station. Speech processor 26 reproduces a audio from a audio signal contained in serial data 2, and outputs the reproduced audio from voice output unit 28. Also, speech processor 26 performs signal-processing to a audio signal supplied from voice input unit 27, and outputs the processed signal as serial data 21.

CPU 29 controls an operation of speech processor 26, and outputs a color code contained in serial data 2 as well as a synchronous word predetermined according to a used slot number as write data signal 13. Also, CPU 29 performs bit error rate calculation based on the total number of error bits represented by signal 12 indicating the number of error bits which is supplied from bit error rate measuring circuit 30.

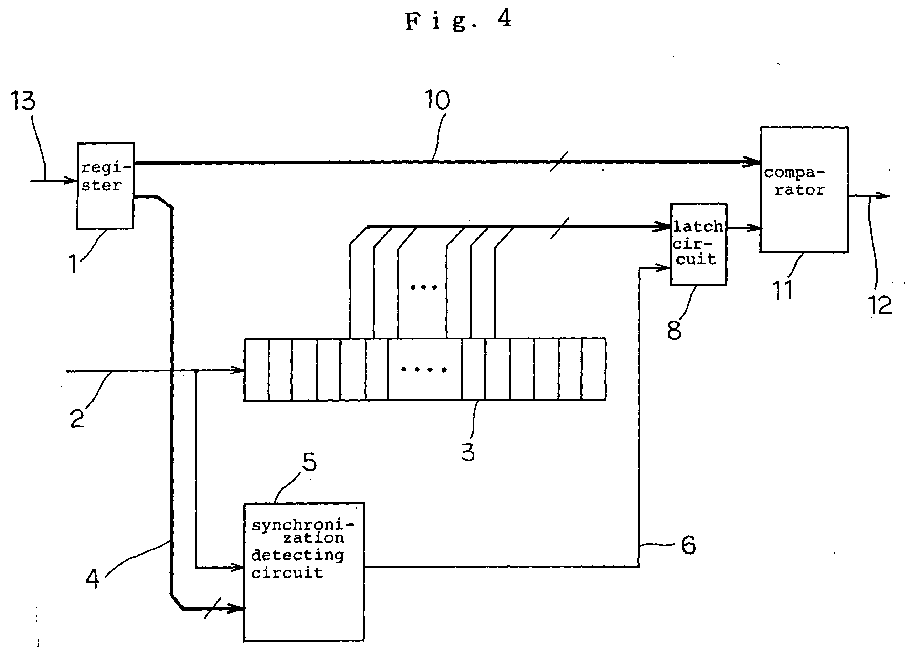

Fig. 4 illustrates a block diagram showing a configuration of bit error rate measuring circuit 30 in Fig. 3. Bit error rate measuring circuit 30 comprises register 1, shift register 3, synchronization detecting circuit 5, latch circuit 8 and comparator 11.

Register 1 stores a synchronous word and a color code written based on write data signal 13 outputted from CPU 29, a synchronous word refers to a signal contained in a specified bit location of a slot, which is transmitted from the radio base station. The mobile station detects a bit location of the synchronous word contained in a received signal for synchronization with the transmitting side. The mobile station stores synchronous words corresponding to respective slots previously. A color code refers to data having a pattern which differs from radio base station to radio base station, and used to identify the opponent of the communication.

RCR (Research & Development Center for Radio System) -27F as a standard for digital automobile telephone systems defines a bit location where a synchronous word and a color code exist in one slot of received data.

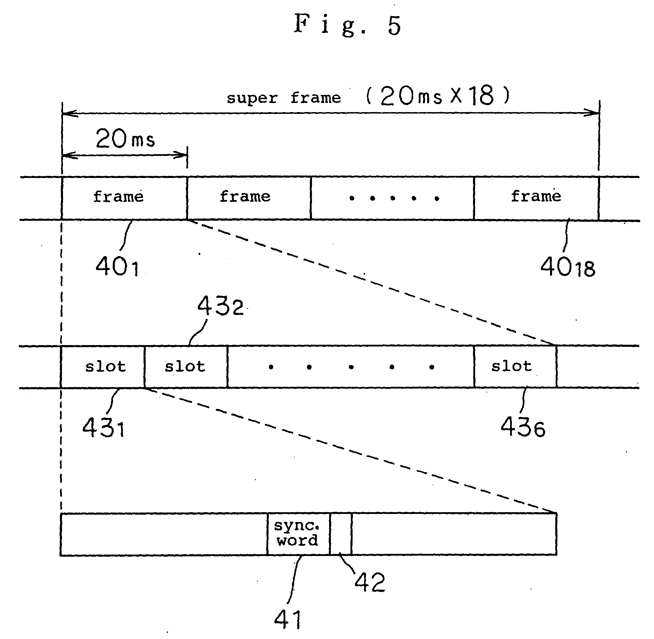

A bit location of the synchronous word and the color code in the received data will be described with reference to Fig. 5, which illustrates a data structure in a communication channel.

A communication channel is made up of a plurality of superframes, each including eighteen frames 40₁ to 40₁₈ in the example of Fig.5. Frame, 40₁ includes six slots 43₁ to 43₆, each containing synchronous word 41 and color code 42 adjacent each other.

A synchronous word to be used may differ from slot to slot, and the mobile station stores synchronous words corresponding to respective slot numbers. When the radio base station specifies a slot number to be used, the mobile station establishes synchronization with the radio base station based on a synchronous word corresponding to the specified slot number.

However, since the mobile station is unable to specify a slot number to be used when power is turned on, a slot number to be used first after power is turned on is determined. Thus, the mobile station is able to specify a synchronous word to be used immediately after power is turned on. The mobile station switches slots to be used to another according to a command from the radio base station.

When there arises a change in a current receiving state such as a zone transfer where a radio base station is changed to another for connection with the communication channel, the mobile station is notified beforehand of a slot number and a color code to be used after such a change by the radio base station. Thus, the mobile station can smoothly perform a hand-over operation between radio base stations or changing of slots with the communication channel being connected.

Shift register 3 is in the form of a FIFO (First In First Out) buffer which operates on a received clock and stores each received serial data 2 bit by bit.

Synchronization detecting circuit 5 reads out synchronous word 4 stored in register 1, and detects a bit string identical to that of synchronous word 4 to detect synchronization timing of the received data from among received serial data 2,. Then, synchronization detecting circuit 5 outputs latch signal 6 when shift register 3 has stored one slot of received data. The reason that synchronization detecting circuit 5 is able to find that shift register 3 has stored one slot of received data, is that synchronization detecting circuit 5 has been informed beforehand the number of bits before and after the synchronous word constitute one slot of data.

Latch circuit 8 latches bits of data equivalent to the synchronous word and color code of shift register 3 when latch signal 6 is generated. Comparator 22 compares the data latched by latch circuit 8 and synchronous word/color code 10 read from register 1 one bit at a time. Comparator 11 then counts the number of error bits, that is, the number of disparity bits between both data, and produces the total as signal 12 indicating the number of error bits.

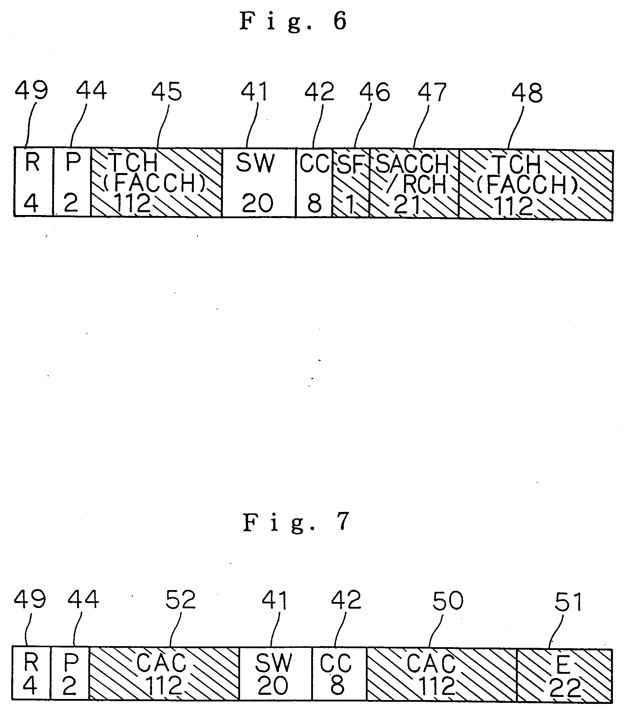

Next, with reference to Figs. 6 and 7, an explanation will be made of the reason the bit error rate measuring circuit in the embodiment uses the synchronous word and the color code to measure the bit error rate. Fig. 6 illustrates a signal format of a downlink channel in a physical channel for communication. Fig. 7 illustrates a signal format of a downlink channel in a physical channel for controlling.

As shown in Fig. 6, the downlink channel in the physical channel for communication carries a burst transient response guard time (R) 49, a preamble (P) 44, a TCH (high-speed ACCH (FACCH)) 45, a synchronous word (SW) 41, a color code (CC) 42, a steel flag (SF) 46, a low-speed ACCH (ACSSH)/housekeeping bit (RCH) 47, and a TCH (high-speed ACCH (FACCH)) 48. As shown in Fig. 7, the downlink channel in the physical channel for controlling carries, a burst transient response guard time (R) 49, a preamble (P) 44, a control signal (CAC) 52, a synchronous word (SW) 41, a color code (CC) 42, a control signal (CAC) 50, and a collision control bit (E) 51. In Figs. 6 and 7, numerals in data represents the number of bits of the data. For example, the number of bits of synchronous word (SW) 41 is 20, and the number of bits of color code 42 is 8. Hatched data represents scrambled data, and non-hatched data represents unscrambled data.

Next, this scrambling will be described.

In a digital automobile telephone system, because of confidentiality of communication, PN (Pseudo random Noise) sequence code is used to scramble transmitted/received data. The PN sequence code is an artificial random number and is generated by a circuit which performs an exclusive OR operation from an initial value of a specified value. The initial value is a color code in the digital automobile telephone system.

To scramble all transmitted/received data would result in failing to obtain a color code required for releasing the scrambling, and to scramble the synchronous word would fail to establish synchronization, and hence a bit location of the received data cannot be determined. For this reason, a specified portion of the transmitted/received data, such as burst transient response guard time (R) 49, preamble (P) 44, synchronous word (SW) 41, color code (CC) 42, is not scrambled. In this embodiment, unscrambled synchronous word 41 and unscrambled color code 42 are used to measure the bit error rate.

RDF-27F defines a signal format of a packet physical channel for communication in addition to the foregoing channels. This signal format is substantially identical to that of the physical channel for controlling, and will not be explained.

Next, an operation of the bit error rate measuring circuit will be described with reference to Figs. 3 and 4.

First, CPU 29 is notified of a slot number to be used by the radio base station, and is able to select a synchronous word corresponding to the slot number from stored synchronous words. Thereafter, CPU 29 uses the selected synchronous word to establish synchronization, and receives to obtain a color code contained in the received signal. The color code to be obtained from the received signal is determined based on majority rule. To be more specific, bits existing in bit locations of the color codes in successive four slots are determined as a color code.

Thereafter, CPU 29 stores data of the synchronous word and the color code in the register 1 through write data signal 13.

Synchronization detecting circuit 5 reads synchronous word 4 stored in register 1, and detects a bit string identical to synchronous word 4 from received serial data 2 to detects a synchronization timing for the received data. At this time, synchronization detecting circuit 5 recognizes the synchronous word even if some bit errors occur in the synchronous word on a radio transmission path.

Since having information beforehand as to how many bits before and after the synchronous word constitute one slot of data, synchronization detecting circuit 5 produces latch signal 6 when shift register 3 has stored the received one slot of data. Latch circuit 8 latches data present at the bit location of the synchronous word and the color code stored in shift register 3 when latch signal 6 has been produced. Comparator 11 reads data of synchronous word/color code 10 stored in register 1, and compares the read data and the data latched by latch circuit 8 one bit at a time. If these data do not match each other, comparator 11 sums up the number of mismatched bits to calculate the number of error bits, which is produced as signal e 12 indicating the number of error bits.

CPU 29 can obtain the number of error bits contains in a bits string including the synchronous word and the color code, based on signal 12 supplied from comparator 11, and also has the knowledge of the number of a color code and a synchronous word. Thus, CPU 29 can estimate a bit error rate in the received frame.

### Second embodiment

A bit error rate measuring circuit according to a second embodiment will be described below. In the first embodiment, all the operations are carried out based on the synchronization timing as detected by synchronization detecting circuit 5. Consequently, if a bit error rate is increased and then synchronization cannot be established between the synchronous word contained in serial data 2 and synchronous word 4 stored in register 1, the bit error rate measuring circuit of the first embodiment fails to measure bit error rat. The bit error rate measuring circuit according to the second embodiment is capable of performing of bit error rate measuring even in such a case.

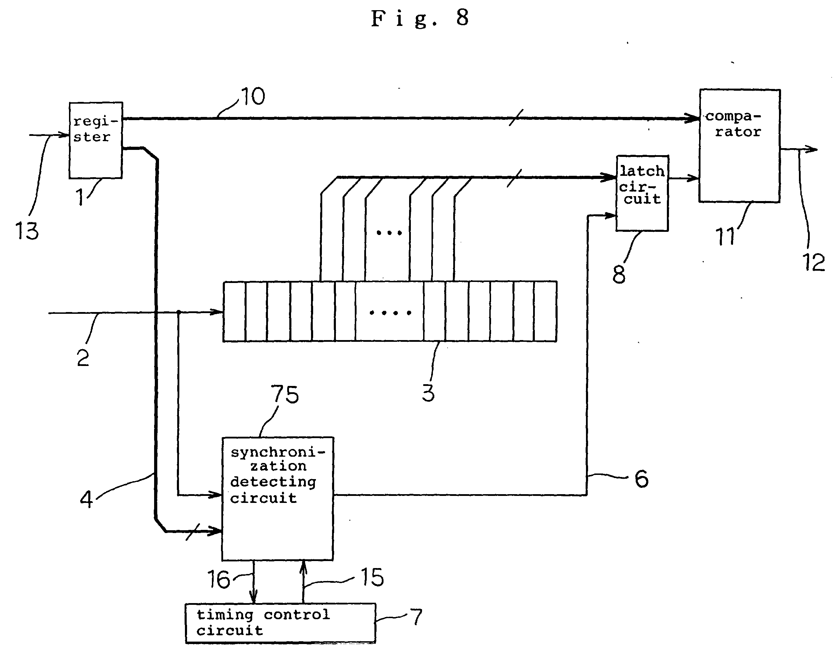

Fig. 8 is a block diagram showing a configuration of the bit error rate measuring circuit according to the second embodiment of the present invention. The reference numerals identical to those in Fig. 4 denote the same components.

The bit error rate measuring circuit of the second embodiment differs from the bit error rate measuring circuit of the first embodiment shown in Fig. 4 in that synchronization detecting circuit 75 is replaced with synchronization detecting circuit 5, and timing control circuit 7 is added.

Timing control circuit 7 generates forcible latch signal 15 if reset signal 16 is not supplied for a period of 20 ms (40 ms at half rate time). Synchronization detecting circuit 75 provides reset signal 16 along with latch signal 6 when synchronization is detected between supplied synchronous word 4 and serial data 2. When forcible latch signal 15 is supplied, latch signal 16 is produced even if no synchronization is detected.

Data is received at a determined timing (20 ms interval at full rate time, and 40 ms interval at half rate time according to RCR-27F). Accordingly, once synchronization is established, a timing for received data of a next slot can be predicted in the receiving side.

In the second embodiment, even if the number of error bits of the synchronous word contained in serial data 2 becomes so larger that synchronization detecting circuit 75 can detect a synchronization, timing control circuit 7 produces forcible latch signal 15 after the passage of 20 ms from the previous output of the last latch signal 6, causing synchronization detecting circuit 75 to produce latch signal 6. This makes it possible to compare data of a bit string in the synchronous word and color code stored in shift register 3 and synchronous word/color code 10 stored in register 1, measuring bit error rate.

### Third embodiment

A bit error rate measuring circuit according to a third embodiment of the present invention will be described below. According to RCR-27F, there exist three kinds of synchronous words received by the mobile station. Therefore, there is no way of knowing from the time that a signal begins transmitting from a radio base station, which synchronous word is first received.

To be concrete, the three kinds of synchronous words refers to a 20-bits synchronous word of a superframe, a 32-bits synchronous word of a synchronous burst used at the time of establishment of physical control channel and channel switching, and a 20-bits synchronous of the remaining frames.

As shown in Fig. 5, the superframe synchronous word indicates a synchronous word of each of slots 43₁ to 43₆ of head frame 40₁ of the superframe, which differs from those of other frames 40₂ to 40₁₈. The superframe synchronous word is provided to obtain a timing for superframe transmission at the receiving side.

Also, a color code in head frame 40₁ of the superframe is 8 bits, and data identical to each color code of other frames 40₂ to 40₁₈ is transmitted.

Next, the 32-bits synchronous word of the synchronous burst will be described below.

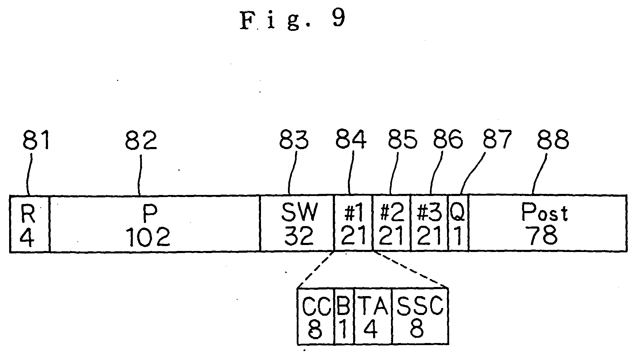

A synchronous burst is a frame used only when the physical communication channel is established and channel is established. Fig. 9 illustrates a signal format in a synchronous burst downlink channel.

As shown in Fig. 9, the synchronous burst carries a burst transient response guard time (R) 81, a preamble (P) 82, a synchronous word (SW) 83, a color code (CC), data 84 to 86 consisting of a burst identifying bit, a time alignment (TA) and a superframe synchronization counter (SSC), a tail bit (Q) 87, and a post-amble (Post) 88.

In this synchronous burst, none of the data are scrambled. However, the mobile station can know beforehand only synchronous word 83 when receiving the synchronous burst. Color code (CC) has also been transmitted, but the color code in the synchronous burst is transmitted to notify the mobile station of a color code to be used by the radio base station, and the transmitted color code cannot be used as data at this time. Furthermore, the number of bits of synchronous word 83 is 32, which is larger than the 20, the number of bits of synchronous word 41, which is contained in the communication channel or the control channel.

Since there are three kinds of synchronous words transmitted from the radio base station as described above, when the bit error rate is measured using one of the bit error rate measuring circuits of the first and second embodiments, a content of the synchronous word stored in register 1 must be changed each time of a received synchronous word is switched. The bit error rate measuring circuit of the third embodiment does not require such processing.

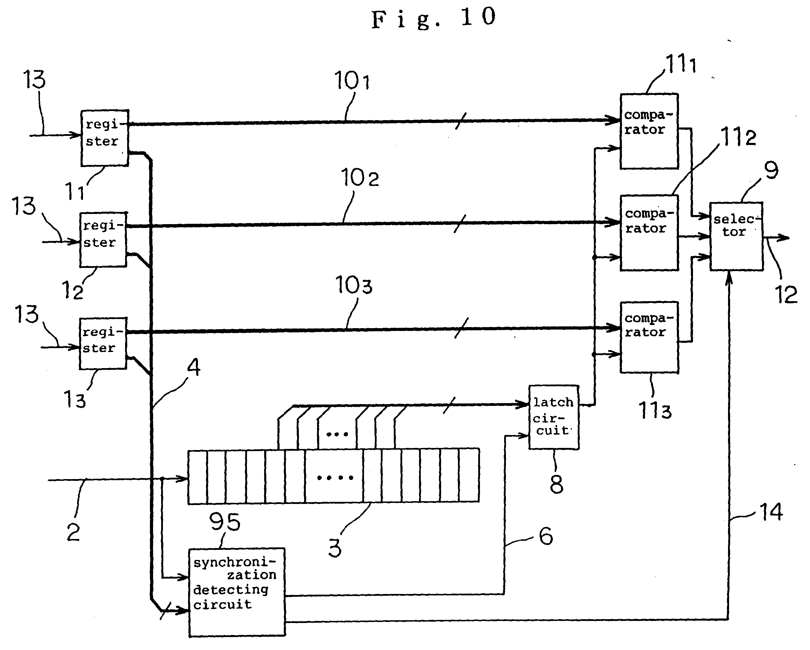

Fig. 10 is block diagram showing a configuration of the bit error rate measuring circuit according to the third embodiment. Reference numerals identical to those in Fig. 4 denote identical components. The bit rate measuring circuit of the third embodiment comprises registers 1₁ to 1₃, a shift register 3, a synchronization detecting circuit 95, a latch circuit 8, comparators 11₁ to 11₃, and a selector 9.

Each of registers 1₁ to 1₃ stores one of the three kinds of synchronous words and a color code according to write data signal 13 from CPU 29. However, the color code needs not be stored in the register to store a synchronous word of a synchronous burst. For example, a 20-bits synchronous word of a superframe and the color code are stored in register 1₁, a 32-bits synchronous word of the synchronous burst in register 1₂, and a 20-bits synchronous word of the remaining frame and the color code in register 1₃.

Each of comparators 11₁ to 11₃ compares data latched by latch circuit 8 with each of synchronous words/color codes 10₁ to 10₃ read from registers 1₁ to 1₃ one bit at a time, counts the number of error bits and produces a signal indicative of the total thereof. Selector 9 selects, from among signals outputted from comparators 11₁ to 11₃, a signal designated by switching signal 14, and then outputs the selected signal as signal 12 indicating the number of error bits.

Synchronization detecting circuit 95 reads synchronous word 4 stored in each of registers 1₁ to 1₃, and detects a bit string identical to that of synchronous word 4 in received serial data 2 for detecting a synchronization timing for received data. Then, circuit 95 outputs; switching signal 14 corresponding to the synchronous word used for detecting the synchronization timing, and produces latch signal 6 when shift register 3 has stored the received one slot of data.

An operation of the bit error rate measuring circuit of the third embodiment will be described with reference to Figs. 3 and 10.

CPU 29 causes registers 1₁ to 1₃ to store a 20-bits synchronous word of the superframe and a color code, a 32-bits synchronous word of the synchronous burst and a 20-bits synchronous word of the remaining frame and the color code via write data signal 13.

Then, synchronization detecting circuit 95 reads synchronous word 4 stored in each of registers 1₁ to 1₃, detects a bit string identical to that of the synchronous word 4 in the serial data 2 to detect a synchronization timing for received data, and outputs latch signal 6 at the detected synchronization timing. Synchronization detecting circuit 95 also provides switching signal 14 corresponding to the synchronous word used for detecting the synchronization.

Then, latch circuit 8 latches data at the bit location of the synchronous word and the color code of shift register 3 when latch signal 6 has been generated. Then, each of comparators 11₁ to 11₃ reads data of each of synchronous words/color codes 10₁ to 10₃ stored in registers 1₁ to 1₃, and compares the read data with the data latched by latch circuit 8 one bit at a time. If these data does not mach each other, comparator 11₁ to 11₃ counts the number of mismatched bits and then provide an output signal indicative of the total.

Finally, selector 9 selects, from among signals outputted from comparators 11₁ to 11₃, an output signal designated by switching signal 14, and outputs the signal 12 indicating the number of error bits.

As disclosed above, even if any one of the three kinds of synchronous words is received, the bit error rate measuring circuit of the third embodiment provides bit error rate measuring with a high accuracy without any procedure to change the synchronous word stored in the register.

### Fourth embodiment

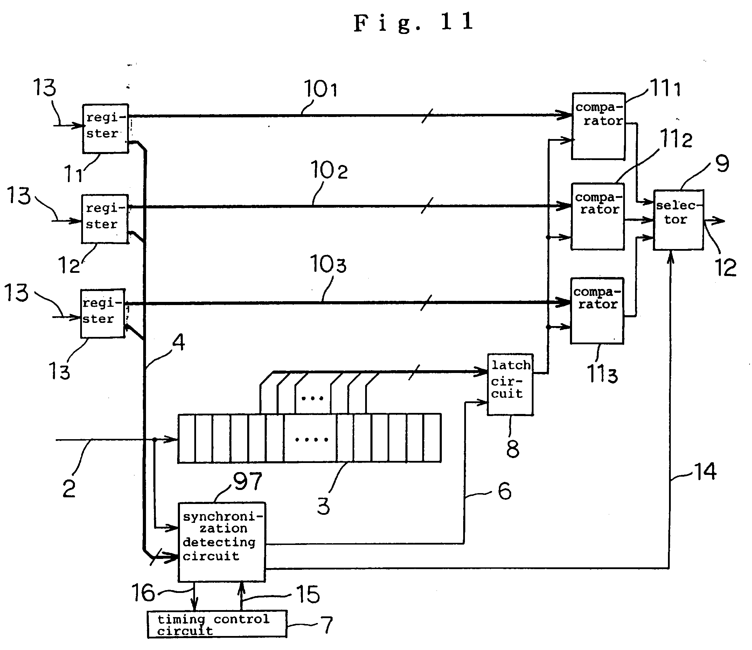

A bit error rate measuring circuit according to a fourth embodiment of the present invention will be described below with reference to the drawing. Fig. 11 is a block diagram showing a configuration of the bit error rate measuring circuit of the fourth embodiment. The reference numerals identical to those in Fig. 10 denote the same components.

The bit error rate measuring circuit of the fourth embodiment differs from the bit error rate measuring circuit of the third embodiment shown in Fig. 10 in that synchronization detecting circuit 97 is replaced with synchronization detecting circuit 95, and timing control circuit 7 is added.

Synchronization detecting circuit 97 has, in addition to the function of synchronization detecting circuit 95 of Fig. 10, a function to produce latch signal 6 when forcible latch signal 15 is supplied with, even if no synchronization is detected.

In the fourth embodiment, like the second embodiment, even if the number of error bits of a synchronous word contained in serial data 2 becomes so larger that synchronization detecting circuit 97 can detect a synchronization, timing control circuit 7 produces forcible latch signal 15 after the passage of 20 ms (40 ms at half rate time) from the previous output of the last latch signal 6, causing synchronization detecting circuit 97 to produce latch signal 6. Thus data of a bit string in the synchronous word and color code stored in shift register 3 are compared with synchronous word/color code 10₁ to 10₃ stored in register 1₁ to 1₃, thereby making bit error rate measuring possible.

The digital automobile telephone system standard in RCR-27F, defines are two kinds of transmission rates: full rate (11.2kbps) and half rate (5.6kbps). Although, in the foregoing first to fourth embodiments, the explanations have been presented with regard to full rate case, the present invention is also applicable to half rate case. In this case, one frame is 40ms, and timing control circuit 7 produces forcible latch signal 15 if reset signal 16 is not applied with a period of 40ms.

Furthermore, in the foregoing first to fourth embodiments, the explanations have been presented a portable telephone set employing the TDMA system described, the present invention is not limited thereto, and may also be applicable to any radio communication systems in which transmission of data determined in advance at the transmitting side is performed.

While the preferred embodiments of the present invention have been described using specific terms, such description is for illustrative purposes only, and it is to be understood that changes and variations may be made without departing from the spirit or scope of the following claims.

## Claims

1. A bit error rate measuring method comprising the steps of:
comparing, from among the signals contained in serial data obtained by demodulating a signal received from a transmitting device, each bit of unscrambled signal which can be predicted to have been transmitted from said transmitting device with each bit of stored signal to determine the number of disparity bits between said two signals; and
calculating a bit error rate of said received signal from said number of disparity bits.

2. A bit error rate measuring method comprising the steps of:
storing in advance, from among the signals contained in serial data obtained by demodulating a signal received from a transmitting device, a unscrambled signal which can be predicted to have been transmitted from said transmitting device;
comparing each bit of said stored signal with each bit of a signal corresponding to said bit of said stored signal among said serial data to determine the number of disparity bits between said two signals; and
calculating a bit error rate of said received signal from said number of disparity bits.

3. A bit error rate measuring method according to claim 2, wherein said unscrambled signal which can be predicted to have been transmitted from said transmitting device comprises a synchronous word and a color code.

4. A bit error rate measuring method comprising the steps of:
storing in advance, from among the signals contained in serial data obtained by demodulating a signal received from a transmitting device, a plurality of unscrambled signals which can be predicted to have been transmitted from said transmitting device;
comparing each bit of said stored signals with each bit of signals corresponding to said bit of said stored signal among said serial data to determine the number of disparity bits between said two signals respectively;
selecting, from among a plurality of said number of error bits, only the number determined based on said signal contained in current serial data; and
calculating a bit error rate of said received signal from said selected number of disparity bits.

5. A bit error rate measuring method according to claim 4, wherein said plurality of unscrambled signals which can be predicted to have been transmitted from said transmitting device comprises a signal composed of a superframe synchronous word contained in a header of a superframe and a color code, a signal composed of a synchronous word contained in a frame other than said header of said superframe and said color code, and a signal composed of a synchronous word of a synchronous burst.

6. A bit error rate measuring circuit comprising:
a means for storing in advance, from among signals contained in serial data obtained by demodulating a signal received from a transmitting device, a unscrambled signal which can be predicted to have been transmitted from said transmitting device;
a shift register for sequentially storing said serial data;
a synchronization detecting means for performing detection of synchronization of said serial data using a stored synchronous word to produce a latch signal at the time said synchronization is detected;
a latch circuit for latching, upon receipt of said latch signal, from among said signals contained in said serial data stored in said shift register, a signal corresponding to the bit location of said signal stored in said storing means; and
a comparator for comparing each bit of said signal stored in said storing means with each bit of said latched signal to determine the number of disparity bits between the two signals.

7. A bit error rate measuring circuit according to claim 6, wherein said unscrambled signal which can be predicted to have been transmitted beforehand comprises a synchronous word and a color code.

8. A bit error rate measuring circuit comprising:
a means for storing in advance, from among signals contained in serial data obtained by demodulating a signal received from a transmitting device, a unscrambled signal which can be predicted to have been transmitted from said transmitting device;
a shift register for sequentially storing said serial data;
a timing control means for producing a forcible latch signal if a reset signal is not supplied for a predetermined period of time;
a synchronization detecting means for performing detection of synchronization of said serial data using a stored synchronous word, producing a latch signal and said reset signal at the time said synchronous is detected, and upon receipt of said forcible latch signal producing said latch signal even when said synchronization is not detected;
a latch circuit for latching, upon receipt of said latch signal, from among said signals contained in said serial data stored in said shift register, a signal corresponding to the bit location of said signal stored in said storing means; and
a comparator for comparing each bit of said signal stored in said storing means with each bit of said latched signal to determine the number of disparity bits between the two signals.

9. A bit error rate measuring circuit comprising:
a plurality of means for storing in advance, from among signals contained in serial data obtained by demodulating a signal received from a transmitting device, a plurality of synchronous words which can be predicted to have been transmitted from said transmitting device or signals composed of said synchronous words and color codes;
a shift register for sequentially storing said serial data;
a synchronization detecting means for performing detection of synchronization of said serial data using each synchronous words stored in said storing means respectively, producing a latch signal at the time said synchronization is detected based on any one of said synchronous words, and producing a switching signal corresponding to said synchronous word used for detecting said synchronization;
a plurality of latch circuits for latching, upon receipt of said latch signal, from among signals contained in said serial data stored in said shift register, signals corresponding to the bit locations of respective signals stored in said storing means;
a plurality of comparators, for comparing each bit of said signal stored in said storing means respectively and said latched signal to determine the number of disparity bits between the two signals; and
a selector for selecting, from among number of disparity bits measured by said respective comparator, only the number of error bits corresponding to said switching signal.

10. A bit error rate measuring circuit comprising:
a plurality of means for storing in advance, from among signals contained in serial data obtained by demodulating a signal received from a transmitting device, a plurality of synchronous words which can be predicted to have been transmitted from said transmitting device or signals composed of said synchronous words and color codes;
a shift register for sequentially storing said serial data;
a timing control means for producing a forcible latch signal if a reset signal is not supplied for a predetermined period of time;
a synchronization detecting means for detecting of synchronization of said serial data using a stored synchronous word, producing a latch signal and said reset signal at the time said synchronous is detected, upon receipt of said forcible latch signal producing said latch signal even when said synchronization is not detected, and producing a switching signal corresponding to said synchronous word used for detecting said synchronization;
a plurality of latch circuits for latching, upon receipt of said latch signal, from among said signals contained in said serial data stored in said shift register, a signal corresponding to the bit location of said signal stored in said storing means;
a plurality of comparators for comparing each bit of said signal stored in said storing means with each bit of said latched signal to determine the number of disparity bits between the two signals; and
a selector for selecting, from among number of error bits measured by said respective comparator, only the number of disparity bits corresponding to said switching signal.

11. A circuit according to claim 9 or 10, wherein a plurality of signals stored in said storing means comprises a signal composed of a superframe synchronous word contained in a header of a superframe and a color code, a signal composed of a synchronous word contained in a frame other than said header of said superframe and said color code, and a synchronous word of a synchronous burst.
